# EUROPEAN PATENT APPLICATION

(11) **EP 0 967 740 A1**
(43) Date of publication of application: **29.12.1999**
(21) Application number: 98304960.2
(22) Date of filing: 24.06.1998
(51) Int. Cl.: H04B 7/185

(54) **Updating system information in LEO satellites terminal using BCCH channel**

(71) Applicant: ICO Services Ltd., London W6 9BN (GB)
(72) Inventor: Grayson, Mark, London W4 2QT (GB); Mullins, Dennis Roy, London SE11 5UL (GB)
(74) Representative: Read, Matthew Charles

(57) **Abstract**

A satellite cellular mobile telecommunications system includes a satellite (3a) that transmits a number of spot beams (31) which constitute cells that sweep over the surface of the earth as the satellite moves in its orbit. A broadcast channel (BCCH) is transmitted to all user terminals (UTs) within an individual cell. The BCCH contains timing data concerning an impending update to an operational parameter for the UTs in the cell. Each UT responds to the timing information to update the parameter at the appointed time. The change can be to any one of the following: PCH, BCCH, RACH, AGCH, HPN channel and neighbouring cell BCCHs. The user terminal may be configured to detect the BCCH in idle mode windows (W) spaced apart in time, in order to save battery power.

## Description

This invention relates to a method of operating a cellular mobile telecommunications system and in particular to an improved way of updating system information by means of cell broadcast signals, and has particular but not exclusive application to a satellite telecommunications system.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the Global System Mobile (GSM) network has become popular, whereas in USA, the Advanced Mobile Phone Service (AMPS) and the Digital American Mobile Phone System (DAMPS) are in use, and in Japan, the Personal Handiphone System (PHS) and the Personal Digital Communication (PDC) network are used. More recently, proposals have been made for a Universal Mobile Telecommunications System (UMTS). These networks are all cellular and land-based with transmitter/receivers which communicate with mobile user terminals.

Considering for example the GSM system, individual cells of the mobile network are served by a series of geographically spaced, terrestrial base station subsystems (BSS) which each comprise a base transceiver stations (BTS) which are coupled through base station controllers (BSCs) to a mobile switching centre (MSC) which may provide a gateway out of the network to a conventional public switched telephone network (PSTN). The PLMN includes a home location register (HLR) which stores information about the subscribers to the system and their user terminals (UTs). When a UT is switched on, it registers with the HLR. If the user roams to a different GSM network, the user terminal registers with a visitor location register (VLR) of the visited network, which communicates with the HLR of the home network for routing and other purposes. DAMPS, PHS and PDC networks have a generally similar architecture.

The telephone call is routed to the subscriber's UT through the MSC, to the BSC and then to the selected BTS, which provides a full duplex channel to the UT. The channel comprises a downlink channel from the BTS to the UT and an uplink channel from the UT to the BTS. The channels include time division multiple access (TDMA) time slots on different frequencies allocated on initiation of the call.

In a GSM system, the telephone call is directed over a dedicated traffic channel or TCH. Each TCH has an associated slow rate control channel or SACCH, which is interleaved with the TCH. These channels are described in more detail on pp 195 - 201 of "The GSM System for Mobile Communications" by M. Mouly and M-B. Pautet, 1992 Cell & Sys, ISBN: 2-9507190-0-7. The channels use frequency hopping and the frequencies for the successive slots that define the channels are arranged in a so called hopping sequence.

Also, a number of common channels are provided for all UTs within a particular cell. A broadcast control channel BCCH is broadcast from the BTS to all UTs within a particular cell, which provides information that identifies the cell to each UT. The BCCH is received by the UT in idle mode i.e. when no call is being made. Each cell has is own BCCH, so the relative signal strengths of the BCCHs at the UT can be used to determine which cell can best be used for TCH/SACCH communication with the UT. Other system information may be transmitted to the UTs of a particular cell in the BCCH. Another common channel is the downlink paging logical channel PCH. This is used to transmit paging messages to a UT, for example to alert the user of the UT to an incoming call. An access grant channel AGCH indicates to the UT a channel allocated by the network, to be accessed by the UT for speech communication (TCH/SACCH) in order to receive the incoming call. In addition to these downlink common channels, there is an uplink common channel which allows UTs within a cell to transmit access requests to the network, when it is desired to make a call from the UT. These requests occur essentially randomly in time and the channel is called the random access channel RACH.

In contrast to the TCH/SACCH, the common channels are transmitted on a common, fixed beacon frequency for the cell concerned, with their various slot patterns interleaved. A fixed frequency is used in order to simplify initial synchronisation acquisition when a UT becomes active in a particular cell, which would otherwise become unduly complex - see Mouly et al, supra, p224.

A number of different mobile telecommunication systems have been proposed that use satellite communication links to the mobile user terminals. One network known as the IRIDIUM ™ satellite cellular system is described in for example EP-A-0365885 and US Patent No. 5 394 561 (Motorola), which makes use of a constellation of so-called low earth orbit (LEO) satellites, that have an orbital radius of 780 km. Mobile user terminals such as telephone handsets are configured to establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). These orbits are also known as intermediate earth orbits (IEOs). The ICO ™ satellite cellular system as described in GB-A-2 295 296, is an example. With the ICO™ system, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station. Each satellite has an antenna which produces an array of spot beams directed towards the earth, that act as cells and correspond to the cells of a conventional terrestrial mobile network, although the cells produced by the spot beams sweep over the surface of the earth as the satellite moves in its orbit. A number of common channels are provided in each spot beam for UTs in a particular cell, including a BCCH, PCH, AGCH and RACH. A high penetration notification (HPN) channel may be included, as described in EP-A-0 844 745.

In a satellite mobile telecommunications system such as the ICO™ system, it may not always be possible to maintain constant parameters for the common channels in a cell. For example, it may be required to change the frequencies of the common channels as the spot beams sweep over different territorial areas, because different countries have different regulatory radio frequency spectrum allocation provisions. Changing the channel frequency would mean that a UT within a cell would have to decode each occurrence of transmitted broadcast data to ensure that the correct parameters were being used by the UT which would be wasteful of UT power. Furthermore, the UT would need to re-acquire the broadcast channel in response to the change in frequency and re-initialise itself in response to the change, which would reduce the quality of service for the satellite network.

With a view to overcoming these problems, the present invention provides a method of operating a cellular mobile telecommunications system, comprising transmitting system information that includes timing data defining when a change is to occur to an operational parameter for user terminals in one of the cells, which is to be broadcast in a broadcast channel for the cell, whereby to permit the user terminals in the cell to make the change at the time that the change is to occur.

The timing data may be indicative of an impending change to at least one said operational parameter within a given time range and may be indicative of an impending change to the configuration of a channel different from the broadcast channel that includes the timing data.

Data relating to the value of the operating parameter which will be adopted as a result of the change may also be included, particularly if the timing information is indicative of an impending change to the configuration of the broadcast channel.

The broadcast channel may be transmitted in a sequence of timeslots at least some of which contain said timing data to be broadcast to the cell. The change can be to any one of the following: PCH, BCCH, RACH, AGCH, HPN channel and neighbouring cell BCCHs

The cellular telecommunications system may comprise a satellite system with the system information being transmitted towards a satellite of the system such as to cause the system information to be broadcast from the satellite for reception by user terminals in a cell that comprises an antenna spot beam of the satellite. The timing data such may indicate a change the operational parameter in dependence on the orbital position of the satellite.

The invention also includes a sub-system for a cellular mobile telecommunications system, comprising a transmitter configured to transmit system information that includes timing data defining when a change is to occur to an operational parameter for user terminals in one of the cells, which is to be broadcast in a broadcast channel for the cell, whereby to permit the user terminals in the cell to make the change at the time that the change is to occur.

In another aspect the invention provides a satellite (or a satellite payload) for a cellular mobile telecommunications system, comprising a beam processing system configured to receive system information that includes timing data defining when a change is to occur to an operational parameter for user terminals in one of the cells, and a transmitter to transmit a broadcast channel that includes the timing data for the cell, whereby to permit the user terminals in the cell to make the change at the time that the change is to occur.

The invention further provides an earth station for a cellular satellite mobile telecommunications system, comprising a transmitter configuration to transmit system information that includes timing data defining when a change is to occur to an operational parameter for user terminals in one of the cells, which is to be broadcast in a broadcast channel for the cell by the satellite, whereby to permit the user terminals in the cell to make the change at the time that the change is to occur.

The invention also extends to signals produced in the cellular network, and in one aspect includes a broadcast signal transmitted by a satellite of a mobile telecommunications system, the broadcast signal including system information that includes timing data defining when a change is to occur to an operational parameter for user terminals in one of the cells, whereby to permit the user terminals in the cell to make the change at the time that the change is to occur.

In another aspect the invention includes a signal transmitted by an earth station towards a satellite of a mobile cellular telecommunications system, the signal including system information that includes timing data defining when a change is to occur to an operational parameter for user terminals in one of the cells, which is to be broadcast in a broadcast channel for the cell by the satellite, whereby to permit the user terminals in the cell to make the change at the time that the change is to occur.

The invention further includes a user terminal for a satellite mobile cellular telecommunications system, including receiver circuitry to receive a broadcast signal transmitted by a satellite of the system, the broadcast signal including system information that includes timing data defining when a change is to occur to an operational parameter for user terminals in one of the cells, and a processor responsive to the timing data to make the change at the time that the change is to occur.

The user terminal may be configured so that the processor responds to the timing data only during predetermined time windows spaced apart in time by predetermined intervals whereby to save power.

The user terminal may be operable in a first mode with a terrestrial mobile telecommunications network and in a second mode with the satellite network.

The invention also includes a method of operating a user terminal for a mobile cellular telecommunications system, including receiver circuitry to receive a broadcast signal including system information that includes timing data defining when a change is to occur to an operational parameter for the user terminal, which is to be broadcast in a broadcast channel for a cell in which the user terminal is located, the method including detecting the data from the broadcast channel, and adjusting the operating parameter of the user terminal in order to make the change at the time defined by the timing data.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic frequency/time diagram illustrating time slots for the FDMA transmission scheme;
Figure 3 is a schematic block diagram of the circuits of satellite 3a;
Figure 4 is a schematic diagram of the cells produced by the spot beams produced by the satellite 3a;
Figure 5 is a schematic diagram of a mobile user terminal;
Figure 6 is a schematic block diagram of the circuits of the user terminal shown in Figure 5;
Figure 7 is a schematic timing diagram of signal interchange between the satellite 3a and the user terminal UT 1 for a PCH update;
Figure 8 is a schematic flow diagram of processing steps carried out at the user terminal 1 for the PCH update;
Figure 9 is a schematic timing diagram of signal interchange between the satellite 3a and the user terminal UT 1 for a BCCH update; and
Figure 10 is a schematic flow diagram of processing steps carried out at the user terminal 1 for the BCCH update.

### Overview of network

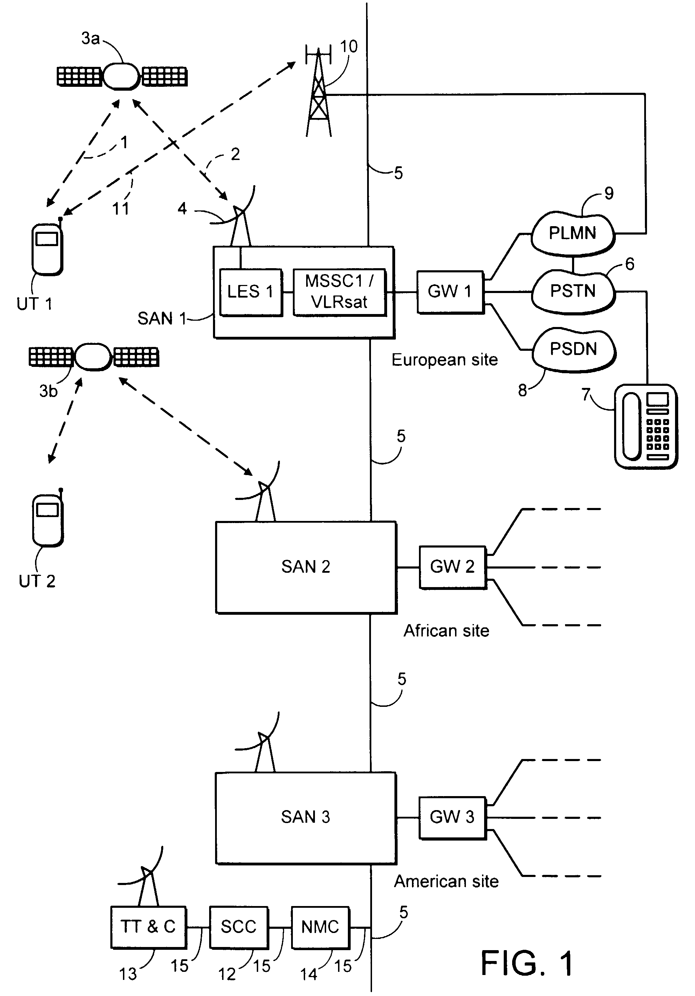

Referring to Figure 1, a schematic block diagram of a satellite mobile telecommunication network is shown corresponding to the ICO™ network. A mobile user terminal UT 1 in the form of a mobile telephone handset can communicate on a radio channel over a communication path 1, 2 via an earth orbiting satellite 3a with a land-based satellite access node SAN1. As shown schematically in Figure 1, SAN 1 is provided with an antenna 4 which can track the orbiting satellite.

A number of the satellite access nodes SAN 1, 2, 3, etc are connected together to form a backbone network 5, which is connected through a number of gateways GW 1, 2, 3, etc to conventional land-based telephone networks. For example, the gateway GW1, is connected to a land-based public switch telephone network (PSTN) 6, which permits connection to be made to a conventional telephone set 7. The gateway GW1 is additionally connected to a public switch data network (PSDN) 8 and a public local mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 can also communicate with the conventional land-based mobile network PLMN 9, which is shown schematically to include a transceiver station 10 that establishes a duplex link 11 with the user terminal UT 1. In this example, the PLMN 9 is a GSM network.

For a fuller understanding of GSM, reference is directed to the various GSM Recommendations issued by the European Telecommunications Institute (ETSI). Also reference is directed to "The GSM System for Mobile Communications" *supra,* for a more readable overview.

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity and redundancy. Additional satellites may be included in the constellation in order to provide further redundancy.

The satellites may be arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN. The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a land earth station LES 1 which is coupled to the five dish antennas 4 for tracking the satellites, the LES 1 including transmitter and receiver circuits with amplifiers, multiplexers, demultiplexer and codecs. A mobile satellite switching centre MSSC 1 is coupled to LES 1 and includes a satellite visitor location register VLR_{SAT} 1. MSSC 1 couples communication signals to the backbone network 5 and to the LES 1, so as to allow individual telephone calls to be established through the backbone network 5 and the duplex communication link 1, 2 via the satellite 3a, to the mobile terminal UT 1. Also, MSSC 1 is connected to the gateway GW1 so as to provide an output connection to PLMN 9, together with PSDN 8 and PSTN 6. It will be understood that all the SANs are of similar construction with a respective VLR_{SAT} to maintain a record of the subscribers registered.

The VLR_{SAT} 1 maintains a record of each of the subscribers currently registered, namely the identity of each user that is making use of the SAN 1 for signal communication.

In Figure 1, the SAN 2 is shown communicating with user terminal UT 2 via satellite 3b. For further details of the network, reference is directed to GB-A-2 295 296 and EP 97302222.1 filed on 1st April 1997.

The satellites 3a, 3b are in non-geostationary orbits and comprise generally conventional hardware such as the Hughes HS 601. They may include features disclosed in GB-A-2 288 913. Each satellite 3a, 3b is arranged to generate an array of radio spot beams covering a footprint on the earth beneath the satellite, each beam including a number of different frequency channels and time slots as described in GB-A-2 293 725. The spot beams thus provide adjacent cellular areas which correspond to the cells of a conventional land-based mobile telephone network.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

### Channel Configuration

During a telephone call, each of the handsets communicates with a respective SAN via one of the satellites. Thus for example, handset UT 1 communicates with SAN 1 via satellite 3a via paths 1, 2 shown in Fig. 1. A full duplex communication path is provided between the UT and the SAN. As referred to herein, communication from the SAN to the UT via the satellite is referred to as a "downlink", and communication directed from the UT via the satellite to the SAN is referred to as an "uplink".

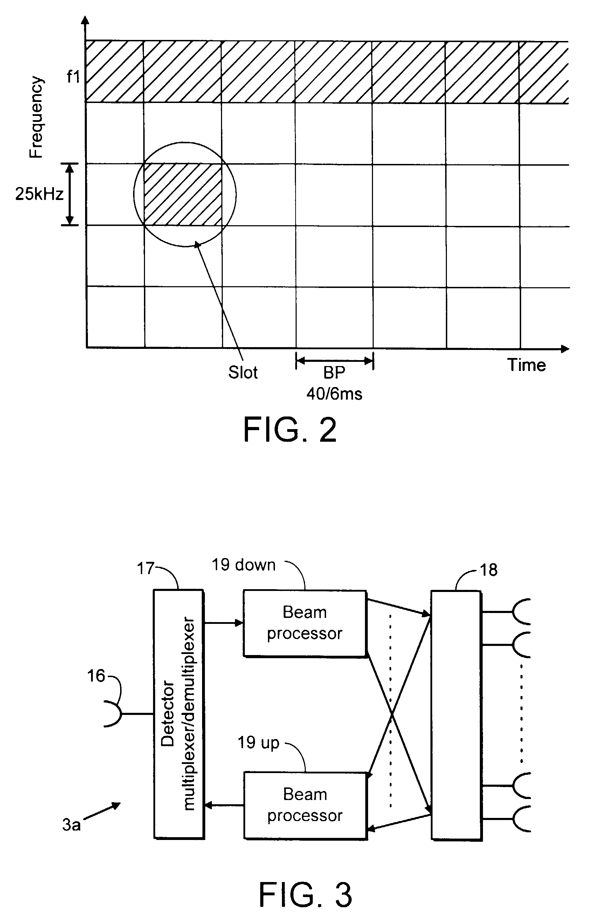

The general configuration of the transmitted signals is similar to those used for conventional GSM transmissions in a PLMN and makes use of a frequency diverse time division multiple access (TDMA) scheme. Referring to Figure 2, the basic unit of transmission between the SAN and UT is a series of about 100 modulated digital bits, which is referred to as a burst. Bursts each have a finite duration and occupy a finite part of the radio spectrum. Thus, they are sent in time and frequency windows which are referred to as slots. The slots are positioned every 25 kHz and recur in time every 40/6 ms. The duration of each slot is referred to as a burst period or BP. A graphical representation of a slot in the time and frequency domain is shown in Figure 2.

The signal transmission scheme includes channels for providing communication between the UTs individually and one of the SANs via a satellite, together with a number of common channels for all UTs within the cell defined by a particular satellite spot beam. The configuration of some of the signal channels will now be described in more detail.

### Individual Channels

For speech transmission, data is sent on an individual traffic channel TCH. Each TCH is provided with an associated slow rate control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

It will be appreciated that with this configuration, 6 TCHs can be interleaved due to the fact that each TCH consists of a slot every 6 BP. The resulting interleaved structure thus provides a frame of 6 TCHs every 6 BP. In contrast to GSM, no frequency hopping is used from slot to slot of the channel.

### Common Channels

In addition to the channels TCH/SACCH for the individual UTs, a number of common channels are provided for all UTs within each cell corresponding to one of the satellite's spot beams, which will now be described in more detail.

A broadcast control channel BCCH is broadcast from the satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT.

System information concerning operational parameters for the UTs of a particular cell is transmitted to the UTs in the cell in BCCH messages. Each BCCH message consists of a number e.g. 4 slots, and is transmitted periodically e.g. every 100 BP.

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH consists of e.g. 1 to 10 slots every 25 BP and the AGCH consists of e.g. 2, 4, 6, 8, 10 or 12 slots every 25 BP.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

When a call is initiated from the UT, a RACH transmission is made by the UT in order to request a TCH/SACCH for the call from the SAN, and the UT then listens to all AGCH messages from the SAN/satellite to determine details of the channel to be allocated for the call. The AGCH messages comprise two bursts in this example. The UT similarly listens to PCH messages for calls initiated from the network via the SAN. For this purpose, the UT listens to 1 burst every 50, 150, 200, 300, 400 or 600 BPs in order to locate PCH messages.

The common channels are transmitted on beacon frequencies for the cell concerned such that BCCH is transmitted on frequency *f1*, PCH/AGCH on *f2* and RACH on *f3.* Adjacent cells have different beacon frequencies to distinguish them from one another. The beacon frequency slot *f1* is shown schematically in Fig. 2 although in practice the beacon frequencies may themselves cycle between different values within a respective allocated frequency slot to provide a cw frequency acquisition portion at a first frequency followed by a data burst at a second frequency.

Information concerning the configuration of these variable format common channels is transmitted to the UTs of a particular cell as system information in the BCCH messages in order to allow the operating parameters of the UTs to be set accordingly. Thus, for example, the configuration of the RACH and how the UT should listen to the slots of the PCH are sent to the UTs in the BCCH messages in order to allow the UTs to listen to the channels.

These channel configurations, together with other operating parameters for the UTs in the cell can change with time and in accordance with the invention, timing data concerning the time at which the parameters are due to change is sent as system information to the UTs in the BCCH messages as will explained in more detail hereinafter.

### Satellite

A schematic diagram of the major signal processing components of the satellite is given in Figure 3. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes a plurality (for example 163) of antennas 18 that produce individual spot beams that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, PCH and AGCH, on the basis of data transmitted to the satellite from the SAN.

For signals on the uplink from the individual UTs to the SAN, the various transmissions including RACH are received by the spot beam antennas 18 and directed to processing circuitry 19ᵤₚ which combines the various channels and passes them to the multiplexer configuration in circuit 17 for transmission through the antenna 16 to the SAN.

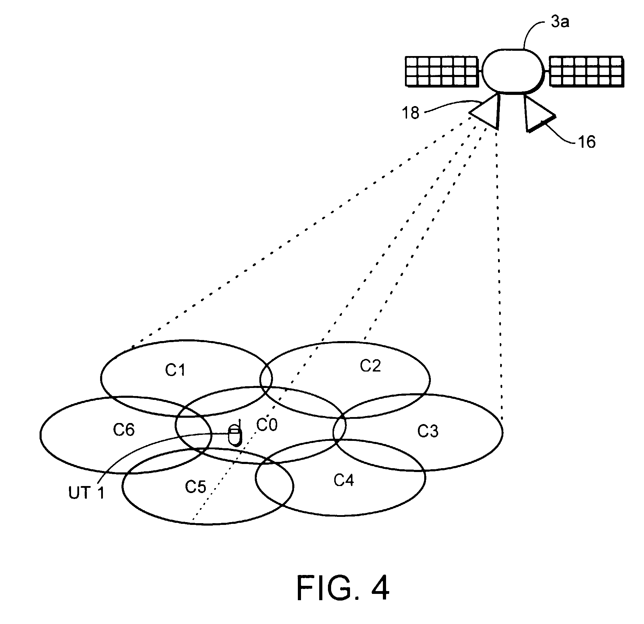

An example of cells C0 - C6 produced by the footprints of seven of the 163 spot beams from antenna 18 is shown schematically in Figure 4. The user terminal UT 1 lies within cell C0 but also can monitor the BCCHs of adjacent cells C1 - C6 and cells produced by other satellites that are within range (not shown).

It will be understood that the foregoing description of the satellite circuitry is schematic and for further details, reference is directed to GB-A-2 288 913 supra.

### User terminal (UT 1)

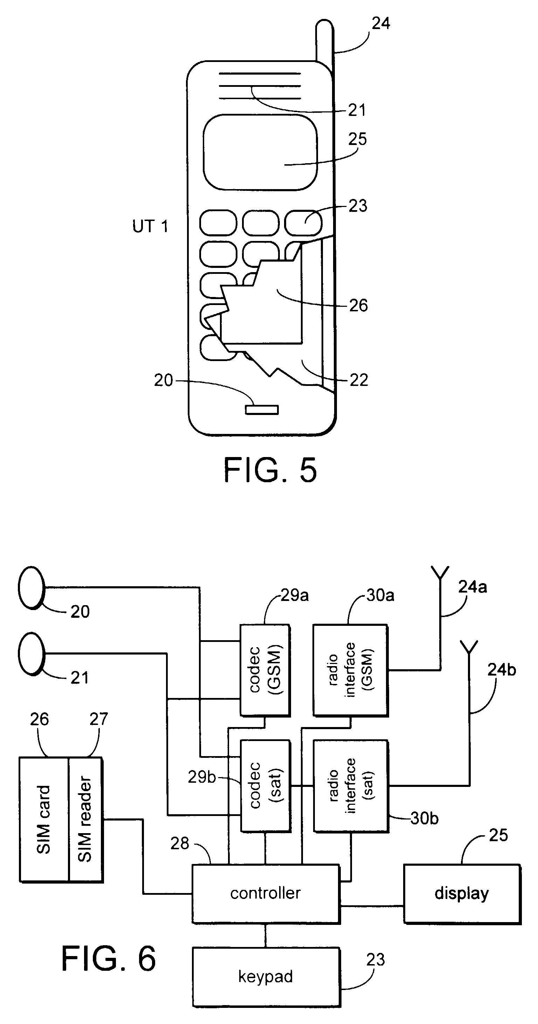

The mobile user terminal UT 1 is shown in more detail in Figures 4 and 5. It comprises a hand held device which is generally similar to a mobile telephone used for conventional terrestrial digital networks. It is powered by a rechargeable battery (not shown) and is configured to operate with both the local terrestrial cellular network and the satellite network. Thus, in the example shown in Figure 1, the mobile handset UT 1 can operate either according to a land-based GSM protocol or according to the satellite network protocol. A shown in Figure 4, the handset comprises a microphone 20, a loudspeaker 21, a battery 22, a keypad 23, antennas a, 24b and a display 25. The handheld unit UT 1 also includes a subscriber identification module (SIM) smartcard 26. The circuit configuration of the handset UT 1 is shown in block diagrammatic form in Figure 5. The SIM card 26 is received in an SIM card reader 27 coupled to a controller 28, typically a microprocessor. The microphone and loudspeaker 20, 21 are coupled to first and second codecs 29a, 29b coupled to conventional radio interfaces 30a, 30b connected to the antennas a, 24b so as to transmit and receive communication signals, in a manner well known ***per se***. The handset is capable of dual mode operation, with the codec 29a, radio interface 30a and antenna a being used with the GSM PLMN 9, and corresponding circuits 29b, 30b and 24b being used with the satellite network.

### Service provision

The described network can provide service to customers in a number of different ways. For example, communication may be provided from UT 1 to UT 2 using the satellite backbone network 5. Alternatively, telephone communication can be established between the telephone set 7 and UT 1 either via SAN 1 and satellite 3a, or, through PLMN 9, antenna 10 and link 11. For a further description of service options, reference is directed to our EP 97302222.1 filed on 1 April 1997.

### Updating of system information

In accordance with the invention, operating parameters for the UTs can be dynamically updated by means of messages transmitted on the BCCH for a particular cell. Some examples will now be described.

### Updating the paging channel (PCH)

As previously mentioned, the paging channel PCH and the access grant channel AGCH are transmitted on a common beacon frequency for each cell (*f2*) and the BCCH is transmitted on a different frequency (*f1*). As the satellite 3a orbits the earth, it passes over different geopolitical regions which may have different frequency spectrum allocation regulatory requirements. As a result, it may be necessary to move the frequency of the paging channel for a particular cell from one frequency to another in order to meet the regulatory requirements whilst optimising the available spectrum. Thus, it may be appropriate to change the PCH from a first frequency (PCH1) to a second frequency (PCH2).

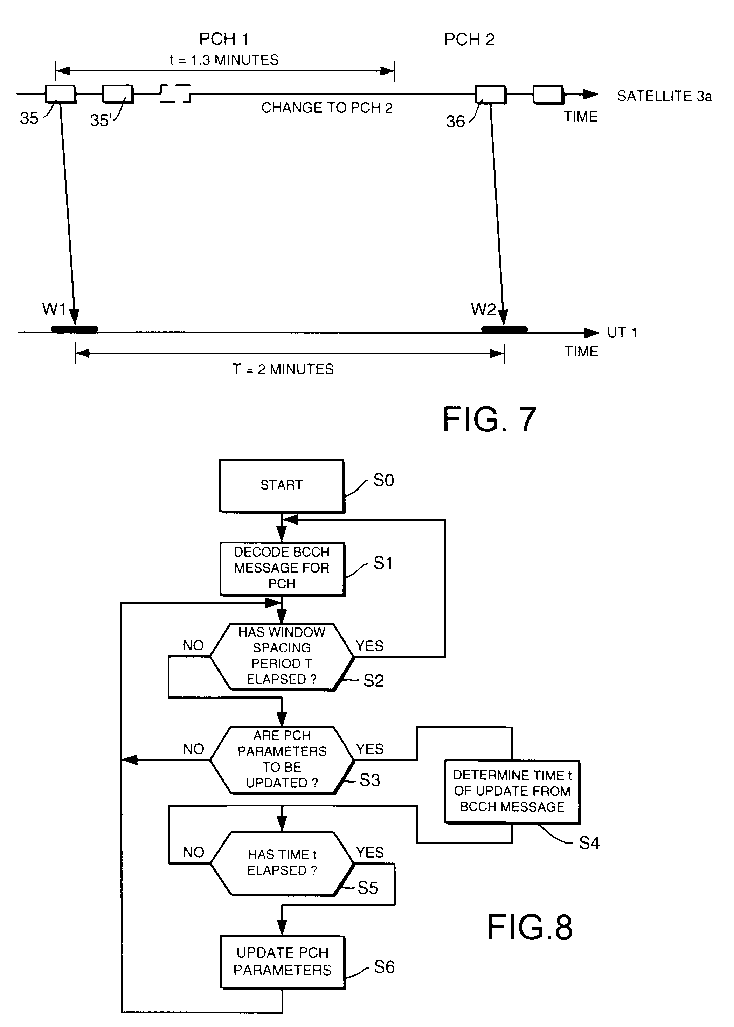

Referring to Figure 7 a series of BCCH messages 35, 36 is shown, transmitted from satellite 3a to user terminal UT 1 whilst in cell C0 (Figure 4). Typically the UT will remain in the cell for approximately 20 minutes. In accordance with the invention, the successive BCCH messages 35, 36 include timing data which indicates the time at which the frequency of the paging channel is to change. The timing data is provided in the form of a time t, which indicates the time to go before the update of PCH frequency within a spacing period T. In this example, the period T = 2 minutes and the PCH is due to change frequency after t = 1.3 minutes after the BCCH message 35. Successive BCCH messages such as message 35' are encoded with a updated value of t due to the fact that the time to go until the change in frequency has reduced at the time that the successive BCCH message is sent.

At the end of the period T, the process starts again and the value of t is reset in relation to the next spacing period T. In the example shown, no further change to the PCH is made and therefore the BCCH message 36 does not include a value of t representative of a future change. Figure 8 illustrates a way in which the controller 28 of UT 1 (Figure 6) processes the BCCH messages.

The process starts at step S0 and at step S1, the BCCH message (e.g. message 35) is decoded.

The step S2 determines whether the period T has expired. On the assumption that it has not, the process moves to step S3 at which the decoded data is interrogated to see whether a value of t has been set in the message. This indicates whether the PCH frequency is to be updated. If it is to be updated, the process moves to step S4 and the value of t is determined.

At step S5, when the time period t has elapsed, the PCH frequency is updated, as shown at step S6. The frequency for paging channel PCH 2 is already known to the user terminal UT 1. It will be understood that the orbital tracks of the satellites are known to the network and that as a result, predetermined frequencies can be allocated to the channels and communicated to the user terminals in a previous set-up operation. Thus, the user terminal merely needs to know that the PCH frequency is to change at a particular time as it already knows the value to which it will change.

The user terminal UT 1 only needs sample the BCCH message during a time window W1 at the beginning of the period T = 2 minutes. Have acquired the value t, the internal clock of the user terminal can be used to trigger the change to PCH2 at the relevant time. Thus, UT 1 does not need to continuously sample each successive BCCH message value and the sampling need only be repeated during window W2 for the next two minute period T, thus saving battery power.

### BCCH Frequency Update

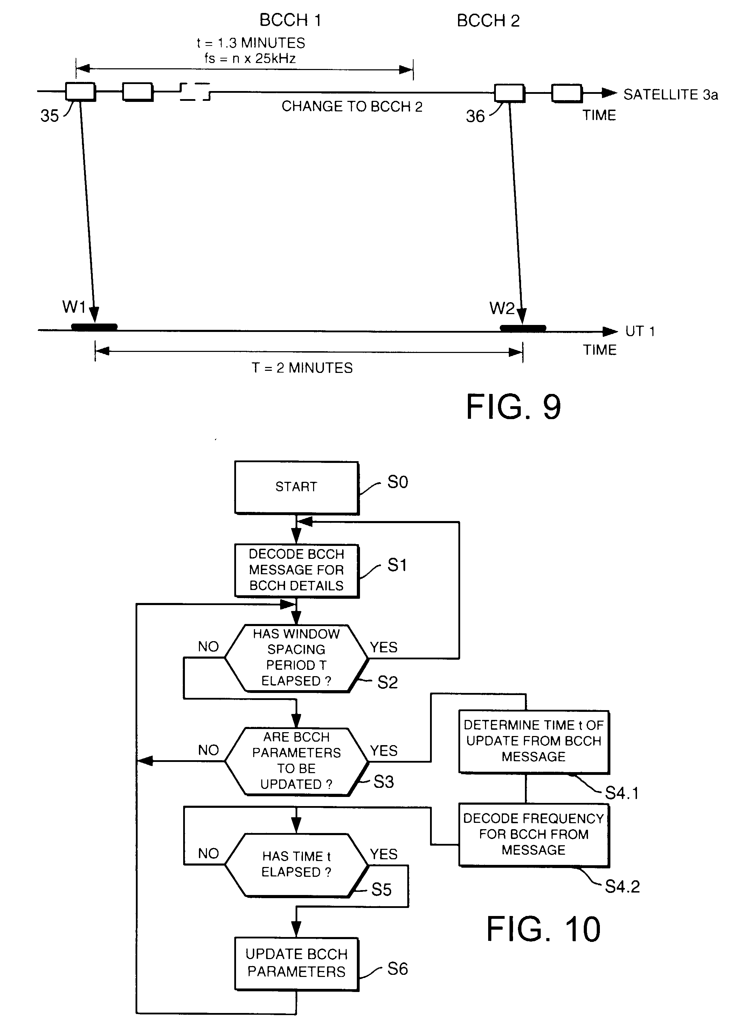

It is desirable for some operational parameters of the UT to transmit both the time at which the parameter is to change together with the updated value itself. This enables parameters such as the BCCH frequency to be changed dynamically. An example in which the BCCH frequency is changed from BCCH 1 to BCCH 2, is shown in Figure 9 and 10. These Figures are generally similar to Figures 7 and 8 and the same reference nomenclature is used. The BCCH message 35 not only includes the timing data t but also an indication fs of the frequency slot to be used for BCCH 2.

The process performed by the UT shown in Figure 10 is substantially the same as for the paging frequency example previously described with reference to Figure 8. However, the step S4 includes two stages. The first, step S4.1, determines the time t of the frequency update for the BCCH. The second, S4.2, involves decoding the new frequency slot fs to be used at time t, from the BCCH message.

Thus, at step S6 in Figure 10, the frequency to which the BCCH should be updated at time t is known and so the controller 28 can retune the user terminal to the new BCCH at the correct time.

It will be understood that other operational parameters for user terminals within the cell can be changed in accordance with the invention. For example, whilst the changing of the PCH and BCCH in terms of frequency have been described, it will be understood that the number of slots and the frame structures of the channels are variable, and the BCCH message can be used to update the user terminal with changes to the slot and frame structures. The AGCH and RACH frequencies and configurations can also be updated in the same way by means of the BCCH messages.

The invention is not limited to updating the previously described channel configurations. For example, as previously mentioned, the user terminal keeps a record of the received BCCH quality from neighbouring cells in order to determine which cell should be used to make a call. By means of the invention, the BCCH frequencies for both cell C0 and surrounding cells C1-C6 can change individually both in terms of frequency and time slot configuration. In accordance with the invention, the BCCH messages transmitted to cell C0 can be used to update the frequency information for surrounding cells at UT 1. Thus, the user terminal UT 1 can continue to monitor the BCCHs for the neighbouring cells notwithstanding changes to their BCCH frequencies.

The ICO™ system also includes a high penetration notification channel which is used to page user terminals in conditions where the UT cannot receive a conventional paging signal e.g. inside buildings. Features of the HPN system are described in our WO-A-98/23045 filed on 29 August 1997. The timing of changes to the HPN frequencies can be notified to the user terminals as timing data in the BCCH messages in accordance with the invention.

Many modifications and variations fall within the scope of the invention. For example, whilst the invention has been described by way of example in relation to the ICO™ satellite network, other satellite networks could be used with different satellite constellations and signal transmission protocols.

Also, whilst the signal communication on the paths 1, 2 utilises a TDMA access protocol, other protocols could be used such as code division multiple access (CDMA) or frequency division multiple access (FDMA).

Although for the sake of convenient explanation, the term "mobile" has been used to denote the user terminals UT, it should be understood that this term is not restricted to hand-held or hand portable terminals but includes for example terminals to be mounted on marine vessels or aircraft, or in terrestrial vehicles. Also, it is possible to practice the invention with some of the terminals UT being completely or at least partially immobile.

Also, the invention, although described by way of example with reference to a satellite system, could also be used in connection with a land based network such as the PLMN 9 shown in Fig. 1 to control the BCCH transmitted via the antenna 10.

## Claims

1. A method of operating a cellular mobile telecommunications system, comprising transmitting system information that includes timing data defining when a change is to occur to an operational parameter for user terminals in one of the cells, which is to be broadcast in a broadcast channel for the cell, whereby to permit the user terminals in the cell to make the change at the time that the change is to occur.

2. A method according to claim 1 wherein the timing data is indicative of an impending change to at least one said operational parameter within a given time range.

3. A method according to claim 1 or 2 wherein the timing data is indicative of an impending change to the configuration of a channel different from the broadcast channel that includes the timing data.

4. A method according to any preceding claim wherein the system information includes said timing data for a change to the operational parameter together with data relating to the value thereof which will be adopted as a result of the change.

5. A method according to claim 4 wherein the timing information is indicative of an impending change to the configuration of the broadcast channel.

6. A method according to any preceding claim including causing the broadcast channel to be transmitted in a sequence of timeslots at least some of which contain said timing data to be broadcast to the cell.

7. A method according to any preceding claim wherein the cellular telecommunications system comprises a satellite system and the transmission of the system information comprises transmitting the information towards a satellite of the system such as to cause the system information to be broadcast from the satellite for reception by user terminals in a cell that comprises an antenna spot beam of the satellite.

8. A method according to claim 7 wherein the satellite travels in a predetermined orbit, and the method includes selecting the timing data such as to indicate a change the operational parameter in dependence on the orbital position of the satellite.

9. A sub-system for a cellular mobile telecommunications system, comprising a transmitter configured to transmit system information that includes timing data defining when a change is to occur to an operational parameter for user terminals in one of the cells, which is to be broadcast in a broadcast channel for the cell, whereby to permit the user terminals in the cell to make the change at the time that the change is to occur.

10. A payload for a satellite for use in a cellular mobile telecommunications system, comprising a beam processing system configured to receive system information that includes timing data defining when a change is to occur to an operational parameter for user terminals in one of the cells, and a transmitter to transmit a broadcast channel that includes the timing data for the cell, whereby to permit the user terminals in the cell to make the change at the time that the change is to occur.

11. An earth station for a cellular satellite mobile telecommunications system, comprising a transmitter configuration to transmit system information that includes timing data defining when a change is to occur to an operational parameter for user terminals in one of the cells, which is to be broadcast in a broadcast channel for the cell by the satellite, whereby to permit the user terminals in the cell to make the change at the time that the change is to occur.

12. A broadcast signal transmitted by a satellite of a mobile telecommunications system, the broadcast signal including system information that includes timing data defining when a change is to occur to an operational parameter for user terminals in one of the cells, whereby to permit the user terminals in the cell to make the change at the time that the change is to occur.

13. A signal transmitted by an earth station towards a satellite of a mobile cellular telecommunications system, the signal including system information that includes timing data defining when a change is to occur to an operational parameter for user terminals in one of the cells, which is to be broadcast in a broadcast channel for the cell by the satellite, whereby to permit the user terminals in the cell to make the change at the time that the change is to occur.

14. A user terminal for a satellite mobile cellular telecommunications system, including receiver circuitry to receive a broadcast signal transmitted by a satellite of the system, the broadcast signal including system information that includes timing data defining when a change is to occur to an operational parameter for user terminals in one of the cells, and a processor responsive to the timing data to make the change at the time that the change is to occur.

15. A user terminal according to claim 14 wherein the processor is operative to respond to the timing data only during predetermined time windows spaced apart in time by predetermined intervals.

16. A user terminal according to claim 14 or 15 operable in a first mode with a terrestrial mobile telecommunications network and in a second mode with the satellite network.

17. A user terminal according to claim 14, 15 or 16 wherein the timing data is indicative of an impending change to at least one of the following: PCH, BCCH, RACH, AGCH, HPN channel and neighbouring cell BCCHs.

18. A method of operating a user terminal for a mobile cellular telecommunications system, including receiver circuitry to receive a broadcast signal including system information that includes timing data defining when a change is to occur to an operational parameter for the user terminal, which is to be broadcast in a broadcast channel for a cell in which the user terminal is located, the method including detecting the data from the broadcast channel, and adjusting the operating parameter of the user terminal in order to make the change at the time defined by the timing data.

19. A method according to claim 18 including responding the broadcast signals only during predetermined time windows spaced apart in time by predetermined intervals.
